Europäisches Patentamt

European Patent Office

Office européen des brevets

(11) Publication number: **0 460 676 A2**

# EUROPEAN PATENT APPLICATION

(21) Application number: 91109310.2

(22) Date of filing: 06.06.91

(51) Int. Cl.5: **G05B 19/10**, G05B 19/05

(30) Priority: 07.06.90 JP 149343/90

(43) Date of publication of application:
11.12.91 Bulletin 91/50

(84) Designated Contracting States:
AT BE CH DE DK ES FR GB GR IT LI NL SE

(71) Applicant: OMRON CORPORATION
10, Tsuchido-cho Hanazono Ukyo-ku
Kyoto 616(JP)

(72) Inventor: **Tanaka, Hideaki, c/o Omron
Corporation
Int. Property Center, 20, Igadera,
Shimokaiinji
Nagaokakyo-City, Kyoto 617(JP)**
Inventor: **Yamamoto, Hiroyuki, c/o Omron
Corporation
Int. Property Center, 20, Igadera,
Shimokaiinji
Nagaokakyo-City, Kyoto 617(JP)**

Inventor: **Katayama, Masakazu, c/o Omron
Corporation
Int. Property Center, 20, Igadera,
Shimokaiinji
Nagaokakyo-City, Kyoto 617(JP)**
Inventor: **Fuke, Junichiro, c/o Omron
Corporation
Int. Property Center, 20, Igadera,
Shimokaiinji
Nagaokakyo-City, Kyoto 617(JP)**
Inventor: **Nakagawa, Akihiko, c/o Omron
Corporation
Int. Property Center, 20, Igadera,
Shimokaiinji
Nagaokakyo-City, Kyoto 617(JP)**

(74) Representative: **WILHELMS, KILIAN &
PARTNER Patentanwälte
Eduard-Schmid-Strasse 2
W-8000 München 90(DE)**

(54) Set-and-display system associated with control component units.

(57) A set-and-display system for setting values and displaying operating status, including a plurality of control component units, such as timers, counters, temperature controllers and so forth, a set display device which includes a display member, a set member, and a control member for controlling display and set. a communication means for mutually connecting said control component units and said set-and-display device. The control component units respectively include a means for transmitting output and operation status respectively generated from the control component units to the set-and-display device by the communication means. The set-and-display device includes a means for selectively displaying the transmitted output and operation status received by the set-and-display device, and a means for transmitting values set by the set member to a control component unit corresponding to the set values by communication means to set the set values to the control component units.

FIG. 3

## BACKGROUND OF THE INVENTION

### 1. Field of the Invention

This invention relates to a set-and-display system or device associated with a control component which can be employed in various industrial machines, and more particularly to an improved set-and-display system for setting and displaying data associateed with a plurality of control components such as timer, counter, temperature controller and so forth.

### 2. Discussion of the Related Art

It is well known that a series of automatic control in industrial machines is performed by a plurality of control component units including timers, counters, temperature controllers and so forth.

A conventional industrial machine is equipped with a control panel mounted by a plurality of control component units which respectively have meters indicating the current operation status and knobs or buttons setting control parameters, whereby the respective operations are seperately displayed by the respective meters and the respective control parameters are seperately set by the knobs or buttons of the control component units.

There is also well known a system for displaying operations and for setting control parameters of a plurality of control component units, in which the respective control component units are connected with a programable controller or a sequence controller which is associated with a display, such as CRT or LCD, to display operations of the respective control component units in accordance with the control by the programable controller and which is associated with a keyboard or touch panel mounted on the display to set control parameters for the respective control component units.

Thus, when a pluarity of control component units including timers, counters, temperature controllers and so forth which respectively have meters and control parameter setting knobs or buttons are mounted on a control panel, the meters and knobs or buttons have different operations, sizes and styles in accordance with kinds of the control component units, and are not uniformed, so that the meters cannot be easily read and the control parameter setting manipulations are complicated and apt to be erroneouly done.

Moreover, since all meters, knobs and buttons of control component units are mounted on a control panel, operating information of unnecessary control component unit is also displayed on the control panel in normal operation and a simple-necessary-minimumdisplay cannot be expected. Such a panel has a risk that knobs or buttons of control component unit which is not neccessary to be changed about control parameters in normal conditions are erroneously manipulated with erroneous change of control parameters.

If one of control component units mounted on a control panel is requested to be differently designed in other machines, the control panel also must be differently designed for each machine. When the design of control component units is changed by adding units, the control panel must be additionally provided with mounting holes and the additional units are usually mounted away from the already mounted units, so that the whole arrangement balance of control component units is deformed and manipulation of the panel is made worse.

When a progmabale controller is employed, the operation of each control component unit is displayed by a common display of the controller and all control parameters are set by a common keyboard, so that the above described problems are overcome. However, output and current values of each control component unit must be read by the programable controller to send necessary display data to its display. When set values in the respective control component units are changed, a preset control parameter is transmitted to each control component unit one by one for each change of sequence or set bank of control component unit itself is changed by operating input signals applied to the unit, which must be performed by the programable controller. Thus, a programable controller is always necessary even in a simple system, and applied by a heavy program load. Moreover, even simple change of cotrol parameters must be operated by a skilled engineer capable of analyzing programs of the controller because all processes have to be performed by the controller. Control component units having functions capable of communicating with programable contrllers are limited and expensive.

## SUMMARY OF THE INVENTION

It is, therefore, a primary object of this invention to provide a set-and-display system for setting and displaying data associated with a plurality of control component units, in which flexibility of display design is enlarged, its manipulation design is improved, and the system is simple and practical.

It is a further object of this invention to provide a set display system which includes a plurality of control component units, a set-and-display device having a display member, a value set member, and a control member for controlling display and value settting, and a communication means for mutually connecting the control component units and the set-and-display device.

According to this invention, there is provided with a set-and-display system including a plurality of control component units which employ timers, counters, temperature controllers and so forth, a set-and-display device which includes a display member, a control parameter set member, and a control member for controlling display and control parameter sat, and a means for mutually communicating the control component units and the set-and-display device, in which the the communicating means transmits output and operation status respectively generated from each control component unit to the set-and-display device to be displayed thereby and transmits a control parameter set by the control parameter set member to a corresponding control component unit to set parameters in the plurality of control component units.

The set-and-display system may be designed to previously store in the set-and-display device combinations of control paramaters for the control component units so that a selected combination of parameters can be collectively sent to the control component units if desired.

According to another aspect of this invention, there is provided with a set-and-display device connectable to a plurality of control component units which is designed to selectively set-and-display items in the display member regarding output and operation status in the pulurality of control component units, and to selectively show on the display member a display for selecting a combination of control parameters of control coponent units which are stored in the set-and-display device.

In the set-and-display system, the plurality of control components and set-and display device mutually and directly exchange data through the communication means, the outputs and operation status of the control component units are displayed on the display member of the set-and-display device, and setting control parameters of the plurality of control component units are collectively performed in the control parameter set member of the set-and-display device.

When a plurality of combinations of control parameters are designed for the plurality of control component units, the respective control component units can be precisely and quickly set because the combinations of parameters are previously stored in the set-and-display device and a selected combination of control parameters are collectively transmitted to the control component units.

The display items about output and operation status of control component units are selectively set in the set-and-display device, the display about output and operation status of control component units by the display member is simplified.

The selection of combination of control parameters for control component units is disposed below a display by the display member.

BRIEF DESCRIPTION OF THE DRAWINGS

The above and other objects, advantages and features of this invention will be more fully understood from the following detailed description provided in conjunction with the following figures, of which:

Fig. 1 is a schematic block diagram of a set-and-display system including a plurality of control component units and a set-and-display device connected with the units as a preferred embodiment of this invention, which is applied to an automatic baking machine for commercial use;

Fig. 2 is a front view of the set-and-display device employed in the system of Fig. 1;

Fig. 3 is a schematic block diagram showing a basic construction of the set-and-display device;

Fig. 4 is a schematic block diagram showing a basic construction of a control component unit employed in the set-and-display system;

Figs. 5 and 6 are memory maps in a storage area and a control area of the set-and-display system;

Fig. 7 illustrates a screen on a product item set mode of the set-and-display device;

Fig. 8 is a flow chart on a collective set mode for control parameters;

Fig. 9 illustrates a screen on a bank selection to change control parameters;

Fig. 10 illustrates a selection screen to change set items;

Fig. 11 illustrates a change screen to change set values;

Figs. 12 and 13 respectively illustrate screens on an operation display mode for respective control component units;

Fig. 14 is a flow chart for table display mode shown in Fig. 12; and

Fig. 15 illustrates a screen when a target number of products are completed.

Detailed Description of the Invention

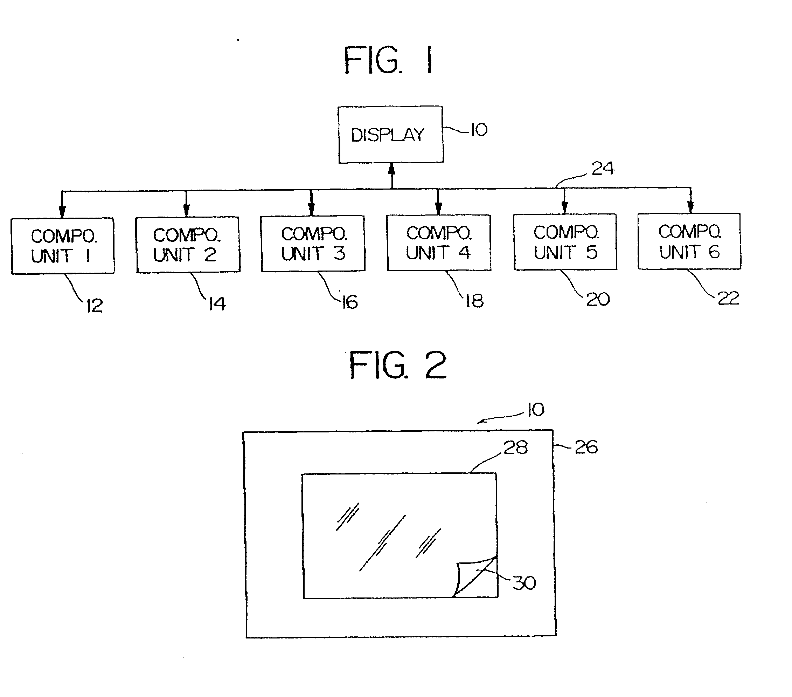

Referring, now, to Fig. 1, there is shown a schematic block diagram of a set-and-display system as a preferred embodiment of this invention, which is applied to an automatic baking machine for commercial use. The system includes a set-and-display device 10, a sterilizing time timer 12 as a control component unit 1, a heating time timer 14 as a control component unit 2, a product number counter 16 as a control component unit 3, a temperature controller 18 for a heating temperature A as a control component unit 4, a temperature controller 20 for a heating temperature B as a control component 5, an entry number counter 22 as a control component 6, and a communication means 24 for connecting the set-and-display device 10 with the control component units 12, 14, 16, 18, 20, and 22.

In Fig. 2. there is shown a front view of the set-and-display device 10 which on its front panel 28 includes a flat shaped display member 28 employing a liquid crystal display (LCD) and a transparent sheet type of a touch switch 30 adhered on a surface of display member 28. The touch switch is disposed to manually set control parameters.

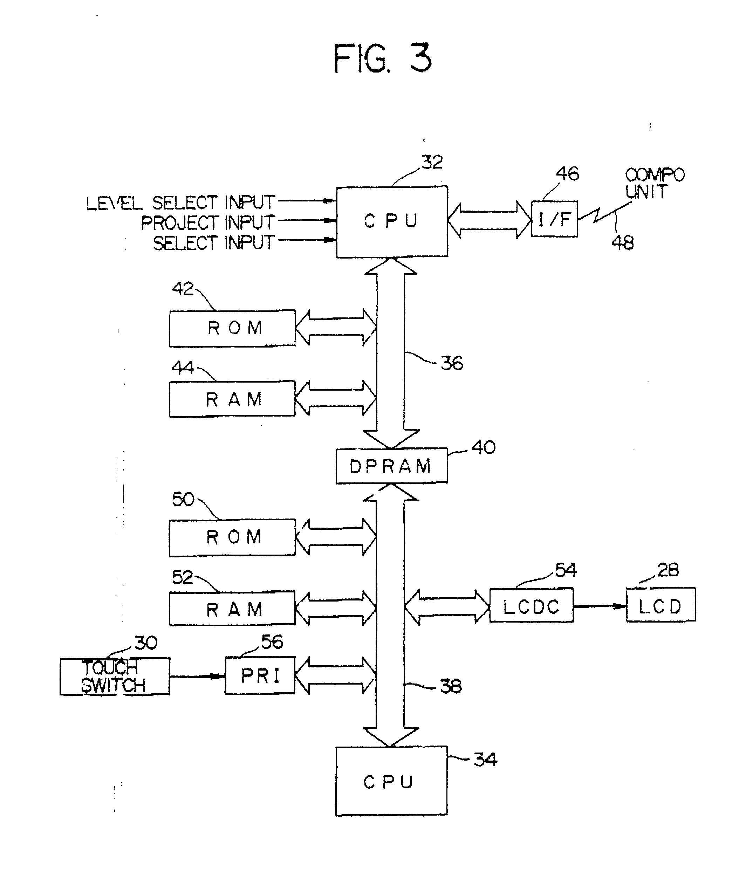

Fig. 3 shows a basic construction of the set-and-display device 10 of Fig. 2. The device 10 includes a CPU 32 for an entire control, a CPU 34 for a display control, and a DRAW commonly connected with CPUs 32 and 34 through buses 36 and 38.

CPU 32 is connected with a system ROM 42, a system RAM 44, and communication interface 46 which is connected with the component units 12, 14, 16, 18, 20, and 22 by a communication line 48 for data communication therebetween. CPU 32 is further designed to receive screen level select input, screen protect input, and screen select input.

CPU 34 is connected with a (Chinese) character ROM 50, a screen data ROM 52, a LCD controller 54, a touch switch peripheral interface 56 in order to receive input from the touch switch 30 and control a screen display on display member 28.

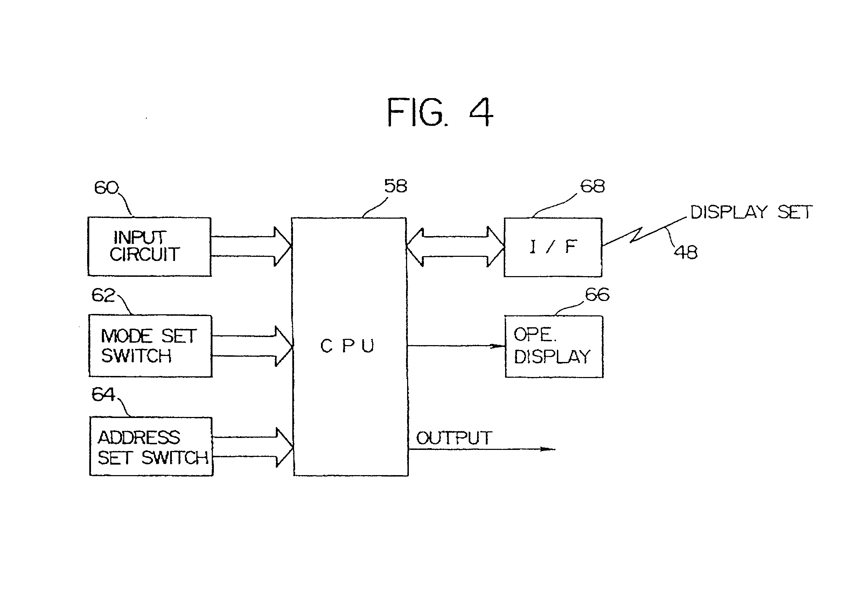

Fig. 4 shows a basic construction of each of control component units; timers 12 and 14, couters 16 and 22, temperature controllers 18 and 20. The control component unit includes CPU 58 connected with an input circuit 60 for receiving a timer counting number, a counter number or a measured temperature, an operation mode set switch 62, a communication address set switch 84 for setting a communication channel, an operation display lamp 66, and a communication interface 68 for data communication with the set-and-display device 10 through a communication line 48. The operation mode set switch 62 and communication address set switch 64 are constructed with DIP switches. The communication address by the address set switch 64 is set to a different communication address for each control component unit 1 through 6 so that CPU 32 of the set-and-display device 10 can identify the control component unit transmitting communication data to the communication interface 48.

Assuming that the automatic baking system employing the construction of Fig. 1 has eight product items, Food A (bean-jam bun), Food B (curry-jam bun), Food C (roll of bread), Food D (bread A), Food E (bread B), Food F (croquette bread), Food G (doughnut), and Food H (bread and cream), an internal construction of the set-and-display system in this embodiment will be explained hereinafter.

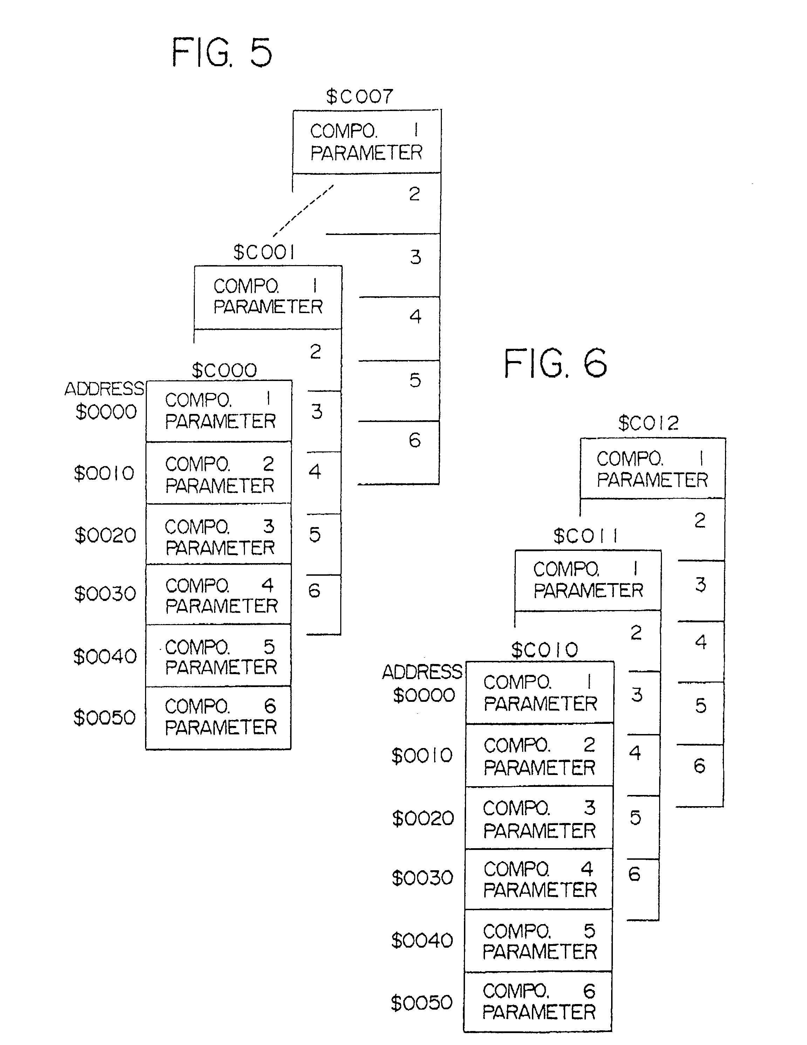

As shown in Fig. 5, the system RAM 44 of the set-and-display device 10 has a storage area for eight columns $C000 - $C007 respectivley corresponding to the eight product items Foods A - H. For example, the column $C000 corresponds to Food A, and $C001 correspond to Food B. Each column has six addresses ; $0000 for storing parameters of the sterilizing timer 12 (component unit 1), $0010 for storing parameters of the heating time timer 14 (component unit 2), $0020 for storing parameters of the product number counter 16 (component unit 3), $0030 for storing parameters of the temperature controller 18 (component unit 4), $0040 for storing parameters of the temperature controller 20 (component unit 5), and $0050 for storing parameters of entry number counter 22 (component unit 6).

Thus, each column stores a combination of control parameters of the respective control component units 1 though 6 in accordance with one of eight kinds of foods to be produced.

The control parameters stored in the column corresponding to the food selected by touch switch 30 for production are collectively read to be applied to a control area of system RAM 44.

As shown in Fig. 6, the system RAM 44 has a control storage area for three columns $C010, $C011 and $C012. Each column has six addresses corresponding to six control component units 1 though 6. The column $C010 is a parameter storage area overwritten by parameters of the respective control component units stored in one of columns $C000 - $C007 so as to collectively set the preset values of the respective component units. The column $C011 is a parameter storage area for storing a specific parameter, e.g., PID coefficients in temperature controller. The column $C012 is a parameter storage area for only reading parameters which are set by the operation mode set switch of control component unit in its input-and-output mode and so forth.

The CPU 32 of set-and-display device 10 is adapted to collectively transmit the combination of parameters for the respective control component units which are stored in the column $C010 of RAM 44 to the respective control component units 1 - 6.

The addresses of storage areas in RAM 44 are linked with the communication addresses set by the communication address set switch 64.

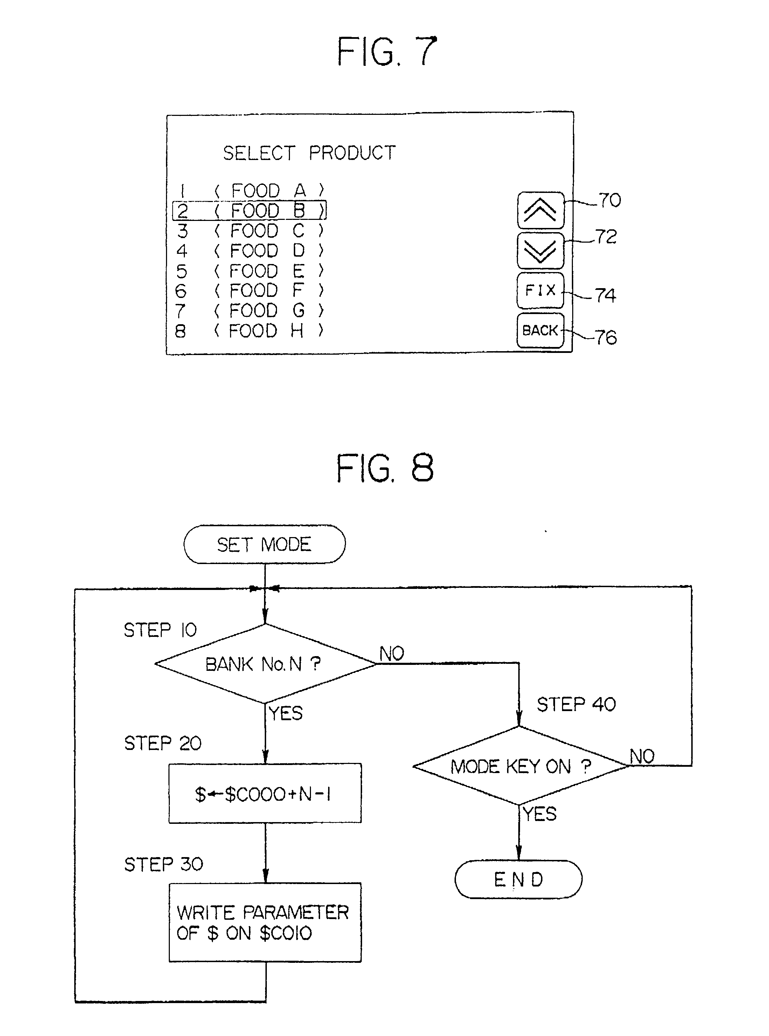

Fig. 7 exemplarily shows a product selection set screen in the display member 28 of the set-and-display device 10 in the above-described collective set mode about control parameters. In this mode, the selection of products is performed by setting a bank. A bank number N is set from 1 to 8, and name of a food to be produced in accordance with the bank number N is set as a bank name. The touch switch 30 in this screen provides roll up key 70, roll down key 72, decision key 74 marked by "FIX", and mode change key 76 marked by "BACK".

The selection of food to be produced, viz. bank change, is performed by roll up key 70 or roll down key 72 which moves the reversely displayed bar cursor among the displayed foods to be produced to decide a bank.

Fig. 8 shows a flow chart of a collective set mode for control parameters in accordance with the product selection set screen as shown in Fig. 7. In a STEP 10, whether or not any bank number N is set is inquired. If a bank number N is set by decision key 74, the column of the storage area of RAM 44 to be read is decided in accordance with the bank number N In STEP 20. Assuming that bank number 2 designating FOOD B (curry-jam bun) is set, the column $C001 is accessed. In STEP 30, parameters stored in the accessed column ($C001) are overwritten on the storage area of the column $C010 of RAM 44.

Then, parameters written to the column $C010 are collectively transmitted to the respective control component units 1 through 6 of Fig. 1 by communication interface 46 under control by CPU 32.

If mode change key 76 is actuated, the sequence moves to STEP 40 to finish the collective set mode.

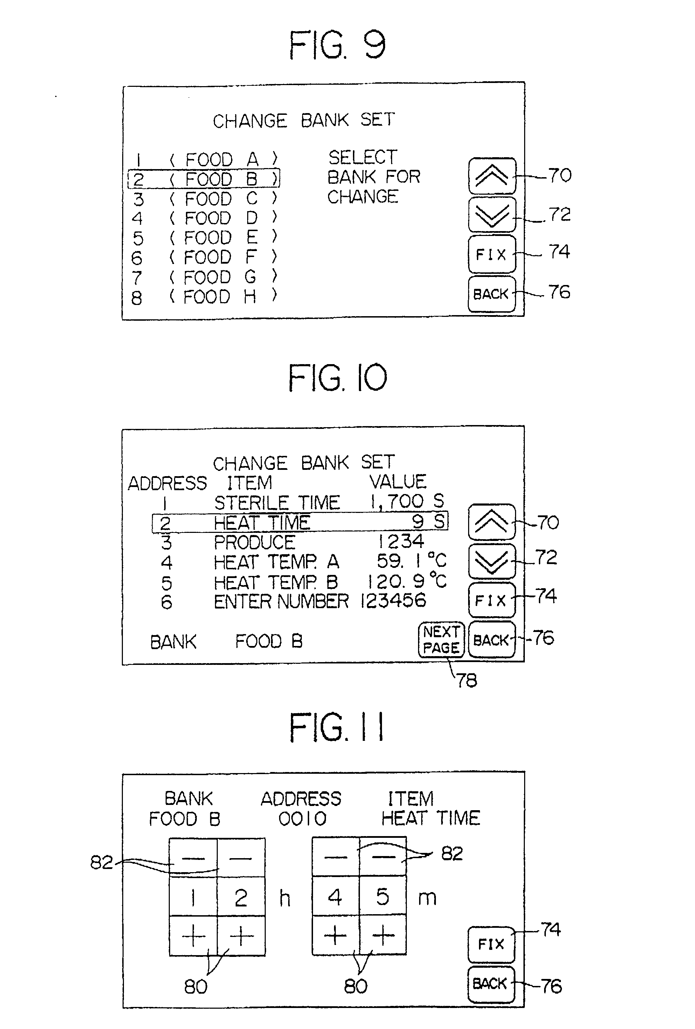

The above-described parameters stored in each column are adapted to be collectively set or changed. Fig. 9 exemplarily shows a screen on the display member 28 on set value change mode. The change of set values is performed for each product item and by selection of the bank number of product item to be produced. The bank number is the save as the number of the above-mentioned set product item, and the key arrangement and function of keys 70, 72, 74, and 76 of Fig. 9 is the same as that of collective set mode in Fig. 7.

Upon selection of a bank number by the decision key 74, the screen of Fig. 9 is changed to a set item selection screen of Fig. 10. On the screen there are displayed communication addresses "ADDRESS", set items "ITEM" and current sat values "VALUE" for the respective control component units, and provided a next page key "NEXT PAGE" 78 in addition to the keys of Fig. 9 to change the screen to next page if any next page has data regarding the set items.

The mode change key "BACK" 76 plays as a back page key to return to the former screen, wherein upon actuation of the key 76 the set value change screen of Fig. 10 is returned to the bank selection screen of Fig. 9.

The display order of the set items on the set item selection screen of Fig. 10 is in the order from high frequency to low frequency of change. If desired, the screen may be modified to display on a next screen set items whose set values are unnecessary to be changed in normal operations, or to erase them from the screen unless a predetermined key operation is executed, so that erroneous setting by erroneous key operations can be reduced.

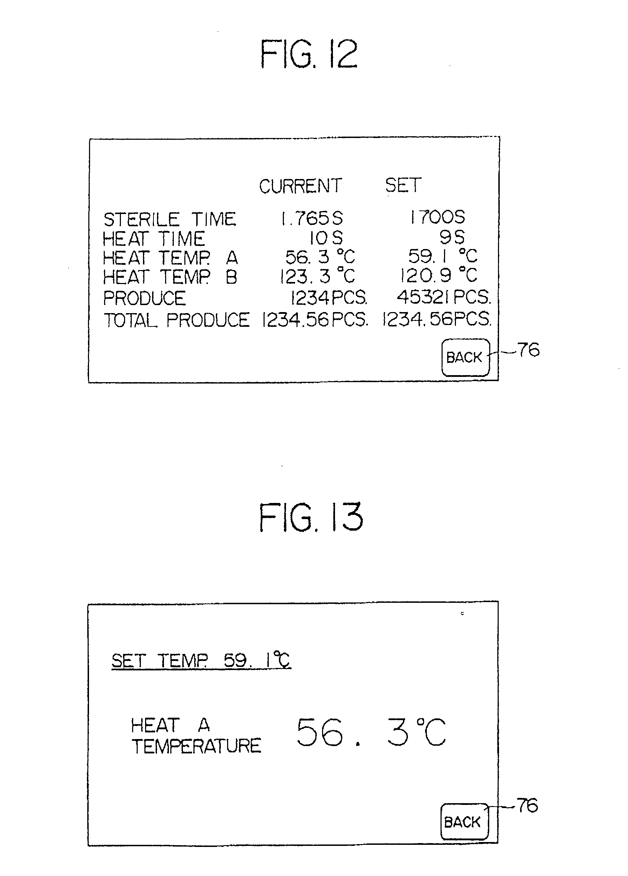

If the address 2 of heating time is selected in the screen of Fig. 10, the screen is changed to a set value change screen of Fig. 11 which displays currant values. The touch switch 30 provides a plus key 80 and a minus key 82 for each digit to increase or decrease a set value.

The set-and-display device 10 displays on its display member 28 operation status read from the respective control component units by communication as exemplarily shown in Fig. 12 or Fig. 13. Fig. 12 shows a table of information about operation status from the respective control comoponent units, and Fig. 13 selectively shown information about a selected control component unit. The display items and their arrangement on the screens Fig. 12 and Fig. 13 are made by a program stored in the screen data ROM 52 which is made by a tool such as a personal computer.

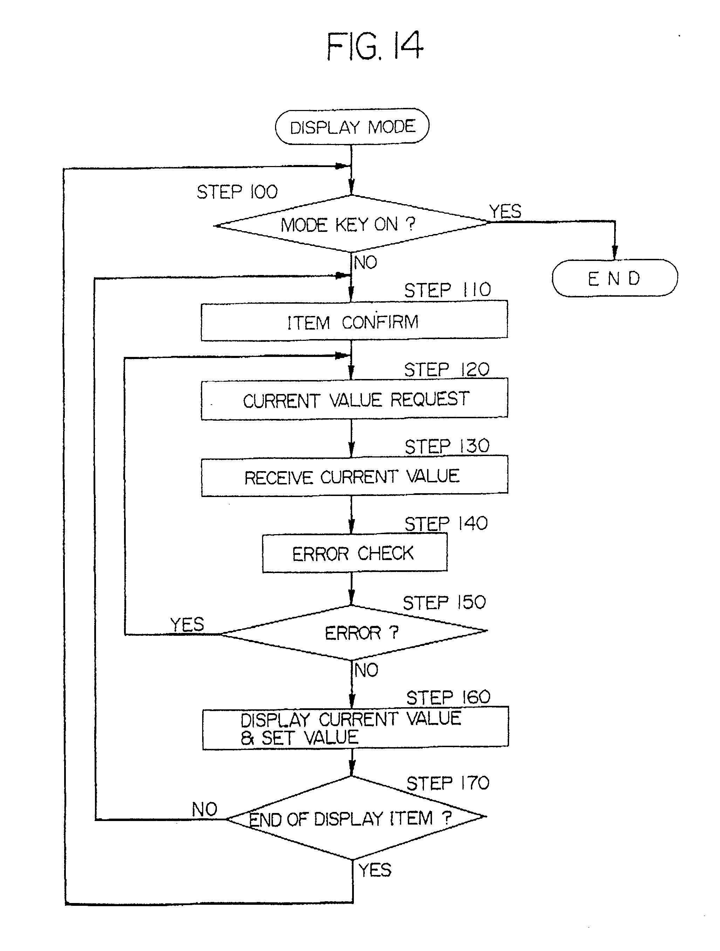

Fig. 14 is a flow chart in the table display mode shown in Fig. 12. In a STEP 100, whether or not the mode change key 76 has been actuated is inquired. Upon the actuation of key 76, the table mode routine is finished. Otherwise, the sequence moves to STEP 110 in which table display items previously set by a program are confirmed. In STEP 120, the sequence makes a request for current values in the control component units designated by the display items. The current values are received by the set-and-display device 10 in STEP 130, and any communication error is cheked in STEP 140. If any communication error is found in STEP 140, the sequence returns to STEP 120. If any error is not found, the sequence goes to STEP 160 in which the received current values and set values are displayed on the display member 28. Whether or not display items to be displayed in a single screen are completed is inquired in STEP 170. Until completion of the display items the sequence returns to STEP 110, but on completion it returns to STEP 100.

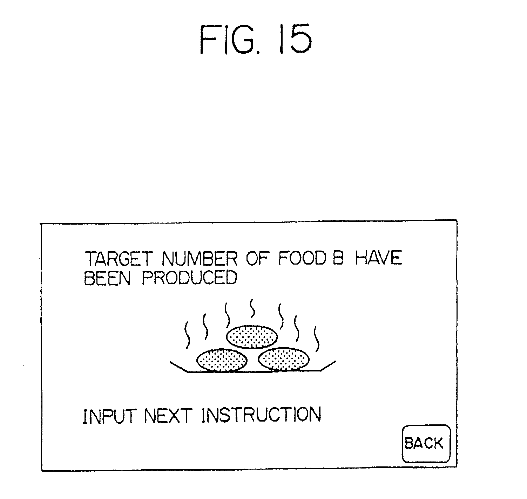

If the product number counter 16 counts a completion that the target number of products FOOD B have been produced and generates an outoput representing such a completion, the set-and-display device 10 automatically executes such an interruption process as shown in Fig. 15. The screen of Fig. 15 is made by a program stored in ROM 52 which is separately made by a personal computer or the like.

The set-and-display device is further provied with a permissible means for setting a permissible range for control parameters which can be accepted by the respective control component units, a means for displaying the permissible range and set parameters on the display member, and an error means for finding any erroneous parameter set by the switch 30 which is out of the permissible range. If any erroneous parameter is set, the erro means externally generates an alarm and to invalidate the erroneously set parameter to notify an operator of request for correct entry of parameters. If desired, the permissible means and the error means may be disposed on the respective control component units. The set-and-display may be modified to include a picture storage area for storing a display data entered by an operator, and a means for displaying the display data stored in the picture storage area on the display member.

Thus, according to the set-and-display system of this invention, the outputs and operation status of a plurality of control component units can be displayed on the set-and-display device, and control parameters for the respective control component units can be precisely and simply set by the control parameter set member of the set-and-display device, without using any programable controller. Accordingly, the respective control component units are not ncessary to have any meters, control parameter setting knobs nor buttons, so that the control component units can be reduced about price.

Each control function is performed by a separated control component unit, so that the system can be easily maintained by replacing a component unit having any trouble.

This system has the advantages that it can keep a same panel design even if application of the system is changed to have an additional control component, and that the system can speedly set control parameters to the control component units because the parameters are collectively transmitted to the component units.

The system also has the concentrated setting and display function on the set-and-display device, so that the total display and setting keys of the system is simplified and the manipulation of the system also is improved.

It should be understood that the above description is merely illustrative of this invention and that many changes and modifications may be made by those skilled in the art without departing from the scope of the appended claims.

## Claims

**1.** A set-and-display system for setting values and displaying operating status, comprising

a plurality of control component units (12, 14, 16, 18, 20, 22), such as timers, counters, temperature controllers and so forth,

a set-and-display device (10) which includes a display member (28), a set member (30), and a control member (34) for controlling display and set,

communication means (24) for mutually connecting said control component units and said set-and-display device,

means (32) for transmitting output and operation status respectively generated from said control component units to said set-and-display device by said communication means,

means (34) for selectively displaying the transmitted output and ooperation status received by said set-and-display device, and

means (32) for transmitting values set by said set member to a control component unit corresponding to the set values by communication means to set the set values to the control component units.

**2.** A set-and-display system according to Claim 1, in which said set display device includes storage means (44) for storing in advance a plurality of combinations of control parameters of said control component units so that a selected combination of parameters can be collectively transimetted to said control component units.

**3.** A set-and-display device (10) connectable to a plurality of control component units, comprising

a display member (28),

a set member (30), and

a control member (34) for controlling display and set, and

communication means (24) for autually connecting said control component units and said set-and-display device,

means (32) for receiving output and operation status respectively generated from said control component units by said communication means,

means (34) for selectively displaying the received output and ooperation status,

means (48) for transmitting values set by said set member to a corresponding control component unit corresponding to the set values by the communication means to be set to the control component units.

**4.** A set-and-display device according to Claim 3 further comprising means (34) for on said display member selecting display items about outputs and operation status of the respective control component units.

5. A set-and-display device according to Claim 3 further comprising storage means (44) for storing in advance a plurality of combinations of control parameters of said control component units, selecting means (34) for on said display member selecting a combination among the stored combinations of parameters.

6. A set-and-display system for setting values and displaying operating status, comprising

a plurality of control component units (12 - 22),

a set-and-display device (10) which includes a display member for displaying operation status of the control comoponent units, a control parameter set member for setting a control parameter, and a control member for controlling display and control parameter set,

communication means (24) for mutually connecting said control component units and said set-and-display device,

means (48) for transmitting control parameters set by said control parmeter set member to a control component unit corresponding to the set control parameter by communication means to set the set control parameters to the control component units,

permissible means for setting a permissible range for control parameters for each control component unit, and

error means in said set-and-display device for finding erroneous parameter setting by said control parameter set member beyond the permissible range to externally generate an alarm or to invalidate the parameter setting.

7. A set-and-display system according to Claim 6, in which said set-and-display device includes means for on the display member displaying a set value and said permissible range by the permissible means in a control parameter set mode.

8. A set-and-display system for setting values and displaying operating status, comprising

a plurality of control component units,

a set-and-display device which includes a display member, a control parameter set member, and a control member for controlling display and control parameter set,

communication means for mutually connecting said control component units and said set-and-display device,

means for storing at a picture storage area a display data made by an operator,

means for transmitting output and operation status respectively generated from said control component units to said set-and-display device by said communication means,

means for on the display member displaying the transmitted output and operation status received by said set-and-display device, and the display data stored in the picture storage area.

# FIG. 1

```
                        ┌──────────┐
                        │ DISPLAY  │── 10
                        └──────────┘
                             ▲
         ┌────────┬──────────┼──────────┬──────────┬──────────┐  24
         ▼        ▼          ▼          ▼          ▼          ▼
   ┌────────┐ ┌────────┐ ┌────────┐ ┌────────┐ ┌────────┐ ┌────────┐
   │ COMPO. │ │ COMPO. │ │ COMPO. │ │ COMPO. │ │ COMPO. │ │ COMPO. │
   │ UNIT 1 │ │ UNIT 2 │ │ UNIT 3 │ │ UNIT 4 │ │ UNIT 5 │ │ UNIT 6 │
   └────────┘ └────────┘ └────────┘ └────────┘ └────────┘ └────────┘
       12        14         16         18         20         22
```

# FIG. 2

EP 0 460 676 A2

# FIG. 3

FIG. 4

DISPLAY SET

48

68
I / F

66
OPE.
DISPLAY

58
C P U

OUTPUT

60
INPUT
CIRCUIT

62
MODE SET
SWITCH

64
ADDRESS
SET SWITCH

# FIG. 5

# FIG. 6

# FIG. 7

```
         SELECT  PRODUCT

    I   ( FOOD  A )
    2   ( FOOD  B )                        ⟨⟨ ⟩──70
    3   ( FOOD  C )
    4   ( FOOD  D )                        ⟨⟨ ⟩──72
    5   ( FOOD  E )
    6   ( FOOD  F )                        [ FIX ]──74
    7   ( FOOD  G )
    8   ( FOOD  H )                        [ BACK ]──76
```

# FIG. 8

SET MODE

STEP 10     BANK No. N ?   —NO→

STEP 20     $\$ \leftarrow \$C000 + N - I$

STEP 30     WRITE PARAMETER OF \$ ON \$C0I0

STEP 40     MODE KEY ON ?   —NO→

YES → END

# FIG. 9

CHANGE BANK SET

| | | |
|---|---|---|
| 1 ( FOOD A ) | SELECT | ⟨⟨ ⟩ —70 |
| 2 ( FOOD B ) | BANK FOR | |
| 3 ( FOOD C ) | CHANGE | ∨∨ —72 |
| 4 ( FOOD D ) | | |
| 5 ( FOOD E ) | | FIX —74 |
| 6 ( FOOD F ) | | |
| 7 ( FOOD G ) | | BACK —76 |
| 8 ( FOOD H ) | | |

# FIG. 10

CHANGE BANK SET

| ADDRESS | ITEM | VALUE | |
|---|---|---|---|
| 1 | STERILE TIME | 1,700 S | ⟨⟨ —70 |
| 2 | HEAT TIME | 9 S | |
| 3 | PRODUCE | 1234 | ∨∨ —72 |
| 4 | HEAT TEMP. A | 59. 1 °C | |
| 5 | HEAT TEMP. B | 120. 9 °C | |
| 6 | ENTER NUMBER | 123456 | FIX —74 |

BANK    FOOD B    NEXT PAGE  BACK —76
                      78

# FIG. 11

| BANK | ADDRESS | ITEM |
|---|---|---|
| FOOD B | 0010 | HEAT TIME |

82— | — | — |    | — | — | —82
    | 1 | 2 | h  | 4 | 5 | m
    | + | + |    | + | + |
      80              80

FIX —74

BACK —76

## FIG. 12

|  | CURRENT | SET |
|---|---|---|
| STERILE TIME | 1.765 S | 1700 S |
| HEAT TIME | 10 S | 9 S |
| HEAT TEMP. A | 56. 3 °C | 59. 1 °C |
| HEAT TEMP. B | 123. 3 °C | 120. 9 °C |
| PRODUCE | 1234 PCS. | 45321 PCS. |
| TOTAL PRODUCE | 1234.56 PCS. | 1234.56 PCS. |

BACK ~76

## FIG. 13

SET TEMP. 59. 1°C

HEAT A
TEMPERATURE    56 . 3 °C

BACK ~76

14

# FIG. 14

```
                    ( DISPLAY MODE )
                            |
  STEP 100                  v
              < MODE KEY ON ? > ----YES----> ( E N D )
                    |NO
  STEP 110          v
              [ ITEM CONFIRM ]
                    |
  STEP 120          v
              [ CURRENT VALUE REQUEST ]
                    |
  STEP 130          v
              [ RECEIVE CURRENT VALUE ]
                    |
  STEP 140          v
              [ ERROR CHECK ]
                    |
  STEP 150          v
      YES----< ERROR ? >
                    |NO
  STEP 160          v
              [ DISPLAY CURRENT VALUE
                & SET VALUE ]
                    |
  STEP 170          v
      NO----< END OF DISPLAY ITEM ? >
                    |YES
```

15

# FIG. 15

TARGET NUMBER OF FOOD B HAVE
BEEN PRODUCED

INPUT NEXT INSTRUCTION

BACK